# EUROPÄISCHE PATENTSCHRIFT

(11) **EP 1 221 354 B1**
(45) Veröffentlichungstag und Bekanntmachung des Hinweises auf die Patenterteilung: **07.05.2003**
(21) Anmeldenummer: 02000552.6
(22) Anmeldetag: 09.01.2002
(51) Int. Cl.: B23Q 3/00, B29C 37/04

(54) **Vorrichtung zum Bearbeiten der Ecken von Rahmen, insbesondere Fenster- oder Türrahmen**
Device for treatment of corner joints of frames, particularly window or door frames
Dispositif pour le traitement des joints d'angle pour châssis, particulièrement pour des châssis de fenêtre ou de porte

(30) Priorität: 09.01.2001 DE 10100693
(43) Veröffentlichungstag der Anmeldung: 10.07.2002
(73) Patentinhaber: ROTOX GmbH B. EISENBACH, 56858 Grenderich (DE)
(72) Erfinder: Eisenbach, Bernd, 65611 Brechen (DE); Daun, Winfried, 56858 Grenderich (DE); Barthel, Thomas, 65551 Limburg (DE)
(74) Vertreter: Müller, Eckhard, Dr.

(56) Entgegenhaltungen:
- EP-A- 0 429 417
- EP-A- 0 673 708
- DE-A- 4 006 317
- DE-U- 7 931 223
- DE-U- 9 305 046

## Beschreibung

Die Erfindung bezieht sich auf eine Vorrichtung zum Bearbeiten der Rahmenecken von aus Kunststoff- oder Metallprofilstücken geschweißten oder aus Holzprofilstücken zusammengefügten Rahmen, wie bspw. Fenster- oder Türrahmen, mittels wenigstens einem verfahrbaren Bearbeitungswerkzeug, mit an den Rahmenaußenseiten zu liegen kommenden verschwenkbaren Anschlägen.

Derartige Verputzvorrichtungen für aus Kunststoff- oder Metallprofilen geschweißte Rahmen, insbesondere für Fensteroder Türrahmen, dienen dazu, die beim Schweißen der Profile an den Schweißnähten der Eckbereiche entstandenen, nach außen vorstehende Schweißraupen zu entfernen. Zum Verputzen der Sichtflächen des Rahmenecks werden Bearbeitungswerkzeuge entlang der Schweißnaht geführt, während zum Entfernen des am Außeneck des Rahmens senkrecht zur Rahmenebene entstandenen Schweißwulstes häufig Profilfräser eingesetzt werden.

Aus der DE-U-79 31 223 ist bereits eine derartige Vorrichtung zum Bearbeiten von Rahmenecken mit unterschiedlichen Rahmenwinkeln bekannt. Die an den Rahmenaußenseiten zu liegen kommenden Anschläge sind mittels einer Stellspindel mit einem Links- und Rechtsgewindeabschnitt verschwenkbar. Die Betätigungseinrichtung für die Anschläge ist in Art eines Gelenkvierecks ausgeführt, wobei abhängig von der Schwenklage der Anschläge die äußere Bearbeitungskante auf einer Geraden längs der Spindel hin und her wandert.

Weiterhin ist aus der EP 0 673 708 A1 eine Eckenverputzvorrichtung mit an den Außenseiten der Rahmen zu liegen kommenden verschwenkbaren Anschlägen bekannt, wobei die Anschläge an kreissegmentförmigen Führungen geführt sind, deren Kreismittelpunkt auf einer Geraden liegt, welche durch die Bewegungsrichtung des wenigstens einen Bearbeitungswerkzeuges in Arbeitsstellung festgelegt ist. Hierdurch ist erreicht, daß die äußerste Kante des zu bearbeitenden Rahmenecks unabhängig von dem durch die Profilschenkel eingeschlossenen Winkel und unabhängig von der Breite des Profils oder der Profilart, wie bspw. Blend- oder Flügelrahmen, stets an der gleichen Stelle bzw. am gleichen Punkt zu liegen kommt. Die Einstelleinrichtung dieser bekannten Eckenputzvorrichtung hat sich insgesamt als gut bewährt, ist jedoch über die bogenförmigen Führungen etwas aufwendiger und teurer in der Herstellung.

Davon ausgehend liegt der Erfindung die Aufgabe zugrunde, eine Vorrichtung der eingangs genannten Art dahingehend zu verbessern, daß sie preisgünstiger herstellbar und im Betrieb zuverlässiger ist.

Zur Lösung der Aufgabe ist es nach der Erfindung i. w. vorgesehen, daß die Anschläge an zwei oder mehr Auflageplatten angeordnet sind, die gegeneinander längsverschiebbar sind. Längsverschiebbar heißt, daß statt der kreisbogenförmigen Führungen des Standes der Technik gerade oder zueinander parallele Führungen verwendet werden. Diese sind in ihrer Herstellung wesentlich billiger und im Gebrauch zuverlässiger als gebogene Führungen.

Die Verfahrrichtung liegt bevorzugt parallel zur Bewegungsrichtung des Bearbeitungswerkzeugs, bei Tür- und Fensterrahmen also in Richtung der Diagonale, die die Verbindungslinie zwischen zwei Profilschenkeln bildet und die zum Beispiel von Schweißraupen zu befreien ist. Ein weiterer Vorteil der Erfindung ist, daß nunmehr nicht allein die Anschläge für die Rahmenkanten, sondern jeweils auch Teile der Auflage, nämlich eine oder mehrere Auflageplatten sich beim Verstellen mitbewegen. Dies führt zu einer höheren Präzision beim Festklemmen. Ist beispielsweise ein sehr spitzes Rahmeneck zu bearbeiten, so werden die äußeren Anlagen relativ weit vorgefahren. Da erfindungsgemäß die Anlagen mit ihren Auflageflächen gekoppelt sind, werden dann auch die äußeren Auflageflächen weiter vor verfahren, was eine günstigere, ebenfalls weiter außen liegende Auflagefläche ergibt.

Die zum Verfahren der Auflageflächen notwendigen Führungen sind Linearführungen und damit relativ preiswert und zuverlässig. Sie sind auch in hoher Präzision am Markt erhältlich, so daß für die gesamte Mechanik auf bewährte und eingeführte Bauelemente zurückgegriffen werden kann, was die Herstellkosten reduziert und die Zuverlässigkeit steigert.

Nach einer ersten Ausführung der Erfindung sind zwei innere und zwei äußere Auflageplatten vorgesehen, wobei bevorzugt jede Auflageplatte einen Anschlag für die Seitenkanten des zu bearbeitenden Rahmenecks enthält. Insgesamt vier Auflageplatten und vier Anschläge sorgen für einen guten, stets klar definierten Halt des Rahmens während der Bearbeitung. Insbesondere bei synchroner Bewegung der beiden äußeren Auflageplatten gegenüber den feststehenden oder sich in anderer Geschwindigkeit ebenfalls synchron bewegenden beiden inneren Auflageplatten kann erreicht werden, daß unabhängig vom Profil bzw. seiner Breite oder Art die äußere Ecke des Rahmens jeweils an der gleichen Stelle innerhalb der Aufnahme bzw. der Bearbeitungsvorrichtung zu liegen kommt, was die Bearbeitung wesentlich vereinfacht oder beschleunigt.

Nach einer besonderen Ausführungsform der Erfindung ist es vorgesehen, daß die innere(n) Auflageplatte(n) feststehen und die äußere(n) Auflageplatte(n) miteinander verfahrbar sind oder daß umgekehrt die äußeren feststehen und die inneren verfahrbar sind. Durch die Verschiebung der äußeren Platten bei festliegenden inneren Platten ist die Lage der äußeren Anschläge im Verhältnis zur Lage der inneren Anschläge auf den inneren Platten so veränderbar, daß unterschiedliche Winkel von Fensterecken aufgenommen werden können. Die zu bearbeitende Rahmeneckspitze hat zwar bei unterschiedlichen Winkeleinstellungen keine feste Lage, ändert ihren Ort beim Winkelverstellen aber nur geringfügig, da die inneren Anschläge, die feststehen, nahe der Rahmeneckspitze sind. Die festbleibende Anordnung eines Teiles der Auflagen ist eine preisgünstige Lösung mit weniger beweglichen Teilen. Sie erlaubt deshalb ein präzises Arbeiten.

In einer weiteren Ausgestaltung der Erfindung sind sowohl die inneren Auflageplatten als auch die äußeren Auflageplatten je miteinander verfahrbar. Beim Verstellen der Rahmenwinkel werden also die beiden inneren und die beiden äußeren Anschläge linear - in die gleiche Richtung - verfahren. Für spitze Winkel der zu bearbeitenden Rahmenecken werden alle Auflageflächen nach außen gezogen, für stumpfe Winkel nach innen geschoben. Dadurch wird es möglich, bei unterschiedlichsten Winkeln und Rahmenstärken eine konstante Lage der Rahmeneckspitze zu realisieren, was zu den bereits in der EP 673 708 A1 genannten Vorteilen der schnellen Bearbeitung führt.

In einer weiteren Ausgestaltung der Erfindung ist ein Getriebe vorgesehen, welches die Verfahrwege der inneren Auflageplatten an die der äußeren Auflageplatten anpaßt. So kann auf einfache Weise eine von dem Rahmenwinkel und der Rahmenbreite unabhängige feste Lage der Rahmeneckspitze realisiert werden. Sind beispielsweise die äußeren Anlagen doppelt so weit von der Bearbeitungslinie entfernt wie die inneren Anlagen, so ist ein Getriebe sinnvoll, das eine 2:1 Übersetzung hat. Beim Verstellen der inneren Anschläge bewegen sich dann die äußeren Anschläge um den doppelten Betrag. Als Resultat bleibt die Rahmeneckspitze am gleichen Ort.

Andere Übersetzungsverhältnisse sind ebenso möglich und richten sich im wesentlichen nach den Abständen der Anschläge. Als Getriebe können alle bekannten Getriebe wie Hebelgetriebe, Zahnrad- oder Zahnstangengetriebe eingesetzt werden.

Nach einem weiteren Gedanken der Erfindung sind Spannelemente zum Festklemmen der Profilschenkel auf den beweglichen Auflageflächen vorgesehen. Sie können bevorzugt als pneumatische Spannzylinder ausgebildet sein, die gemeinsam betätigt werden, was zu einer schnellen, sicheren Klemmung ohne sichtbare Druckstellen am Rahmen führt. Die Spannelemente sind bevorzugt auf den festen oder beweglichen Auflageplatten montiert, bewegen sich beim Verstellen der Winkel also mit. Da ihre Lage relativ zu den ebenfalls mitbewegten Anschlägen konstant bleibt, ist bei allen Profilbreiten und -formen ein guter, sicherer Sitz des eingeklemmten Rahmens erreichbar. Fehlbedienungen sind so vermeidbar.

Weiterhin empfiehlt es sich nach der Erfindung, eine Ausrichtungseinrichtung vorzusehen, die das Ausrichten des Rahmens bezüglich seiner Diagonale bzw. der zu bearbeitenden Schweißraupe erleichtert. Möglich sind Zangen oder Lehren, die sich symmetrisch zur Bearbeitungsachse öffnen und ein zentriertes Anlegen erleichtern. Möglich sind auch Laser oder andere optische Hilfsmittel, die die Bearbeitungsachse sichtbar darstellen. Damit können auch ungeübte Hilfskräfte die Rahmen schnell und präzis auflegen.

In einer Ausführung der Erfindung kann eine Automatik zum Einstellen der Start- oder der Endposition oder des Verfahrweges des Bearbeitungswerkzeuges in Abhängigkeit vom eingestellten Rahmenwinkel vorgesehen sein. Sinnvoll ist eine solche automatische Verstellung des Startpunktes der Bearbeitungseinrichtung dann, wenn sich beim Verfahren der Anschläge auch die Lage der Rahmeneckspitze verändert. Die Bearbeitungseinheit steht dann nach jeder neuen Geräteeinstellung wieder in der richtigen Startposition, was vor allem bei numerischer Steuerung der Bearbeitungseinrichtung einen schnellen Start erlaubt.

Die Begrenzung des Verfahrweges durch automatische Einstellung einer Endposition stoppt das Verfahren des Fräsers über den zur Bearbeitung des äußeren Rahmenschenkelspitze notwendige Stellung hinaus und erleichtert so die Bedienung.

In einer besonderen Ausführungsform der Erfindung sind die innere Auflageplatte und die äußere Auflageplatte jeweils U-förmig ausgebildet, wobei die äußere Platte die innere umschließt. Die U-förmigen Schenkel der inneren Platte bilden die beiden inneren Auflageflächen (mit zum Beispiel den beiden inneren Anschlägen); die U-Schenkel der äußeren Platte bilden die beiden äußeren Auflageflächen (mit zum Beispiel den beiden äußeren Anschlägen). Diese Ausführung kommt mit wenigen beweglichen Teilen aus, wobei durch den verbindenden U-Bogen eine feste, starre Verbindung der jeweiligen Auflageflächen garantiert ist, was eine hohe Präzision ergibt.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen.

Es zeigen:
- Figur 1: eine perspektivische Darstellung einer möglichen Ausführungsform einer erfindungsgemäßen Vorrichtung in Anordnung an einem Eckenputzautomaten mit zwei verschwenkbaren Außenanschlägen,
- Figur 2: die erfindungsgemäße Vorrichtung gemäß Figur 1, jedoch in einer anderen Schwenkstellung der Außenanschläge,
- Figur 3: eine perspektivische Darstellung einer weiteren Ausführungsform einer erfindungsgemäßen Vorrichtung in Anordnung an einem Eckenputzautomaten mit vier verschiebbaren Außenanschlägen,
- Figur 4: die erfindungsgemäße Vorrichtung gemäß Figur 3, jedoch in einer anderen Schwenkstellung der Außenanschläge und
- Figur 5: eine wiederum andere Ausführungsform einer erfindungsgemäßen Auflage.

Die Vorrichtung zum Bearbeiten der Rahmenecken von aus Kunststoff oder Metallprofilstücken geschweißten oder aus Holzprofilstücken zusammengefügten Rahmen 7, wie bspw. Fenster- oder Türrahmen, weist ein (nicht dargestelltes) Maschinengestell auf, welches mit einer Aufnahme für die zu bearbeitenden Rahmen 7 versehen ist. Die Aufnahme besteht bei dem hier gewählten Ausführungsbeispiel aus zwei im seitlichen Abstand voneinander angeordneten inneren Auflageplatten 1, welche ortsfest bezüglich des Maschinengestells angeordnet sind, und zwei verschiebbaren äußeren Auflageplatten 8.

Der Freiraum zwischen den beiden inneren Auflageplatten 1 dient als Verfahrweg für die Bearbeitungswerkzeuge, zum Beispiel Fräswerkzeuge, welche insgesamt mit Bezugszeichen 2 dargestellt sind. An den beiden inneren Aufnahmeplatten 1 befinden sich feststehende Außenanschläge 3 für den Rahmen 7, welche bei dem hier gewählten Ausführungsbeispiel als Rollen ausgebildet sind. An den beiden äußeren, beweglichen Aufnahmeplatten 8 befinden sich mitbewegbare Außenanschläge 4, die hier ebenfalls als Rollen ausgebildet sind. Den festen Anschlägen 3 sind also jeweils im seitlichen Abstand bewegliche äußere Anschläge 4 zugeordnet, um den unterschiedlichen Winkeln der Profilschenkel 5, 6 des Rahmens 7 gerecht zu werden.

Die äußeren Auflageplatten 8 sind längsverschiebbar an Führungen 12 des Maschinengestells gelagert. Zwischen den festen Anschlägen 3 und den beweglichen Anschlägen 4 ist je ein schwenkbarer Verbindungssteg 13 vorgesehen. Die äußeren Anschläge 4 führen beim Verschieben der äußeren Auflageplatten 8 eine Schwenkbewegung um den jeweiligen festen Anschlag 3 aus.

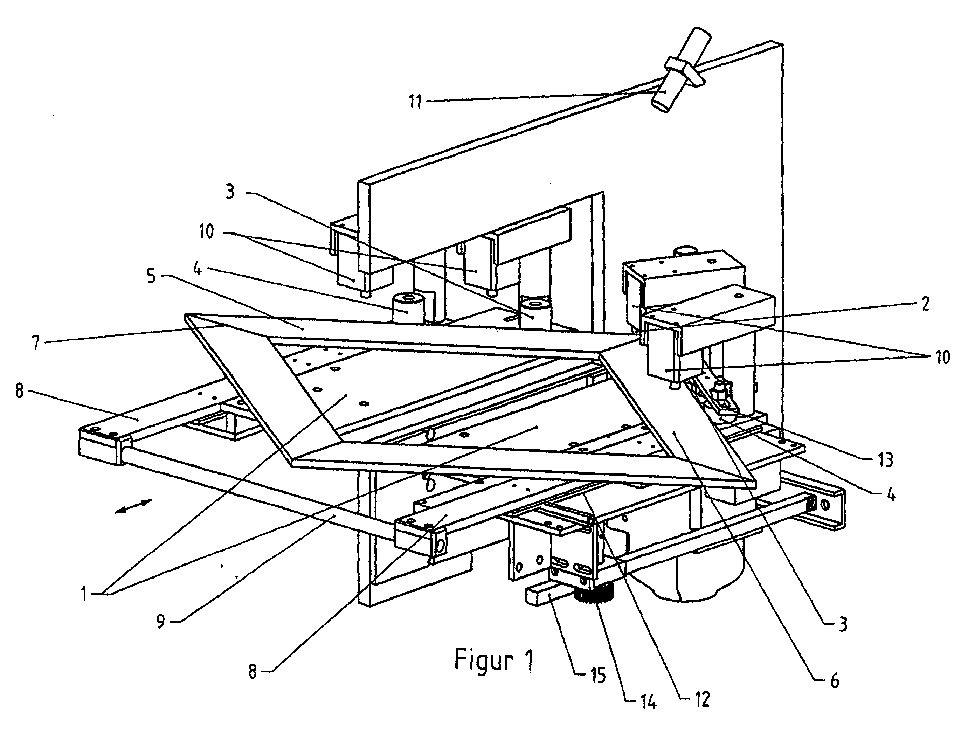

Diese äußeren Auflageplatten 8 sind für eine synchrone Verschiebbarkeit ausgebildet, indem ihre Enden mittels einer Betätigungsstange 9 verbunden sind. Durch Ziehen oder Drücken an der Betätigungsstange 9 in Richtung des in Figur 1 dargestellten Doppelpfeiles lassen sich unterschiedliche Winkel der Anschläge 3, 4 entsprechend dem Winkel der Profilschenkel 5, 6 des jeweiligen Rahmens 7 einstellen.

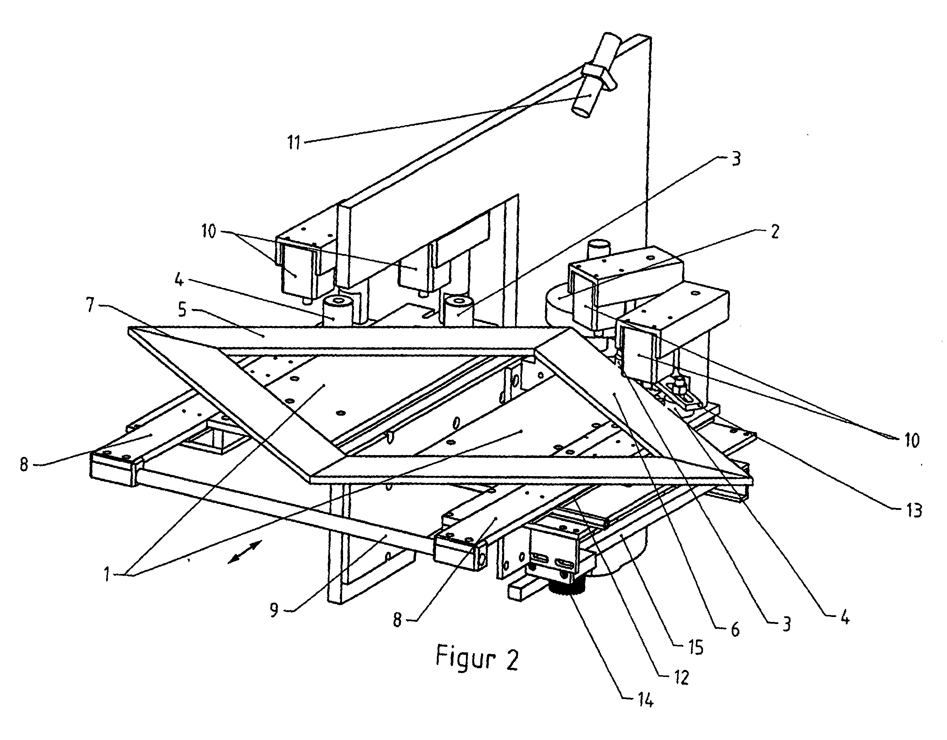

Wie aus den Figuren 1 und 2 ersichtlich, sind auf den Auflageplatten 1 und 8 insgesamt vier Spannzylinder 10 vorgesehen, mit welchen der Rahmen 7 auf den Auflagetisch gespannt werden kann. Die Spannzylinder 10 sind bei dem hier gewählten Ausführungsbeispiel in unmittelbarer Nähe der Anschläge 3 und 4 angeordnet, wodurch sie bei anliegendem Rahmen automatisch immer direkt über dem entsprechenden Profilschenkel 5, 6 stehen und diesen sicher greifen und festklemmen können.

Weiterhin ist eine Ausrichtungseinrichtung 11 vorgesehen, welche ein Ausrichten des Rahmens 7 bezüglich seiner Diagonalen oder seiner Schweißraupe in der Maschine ermöglicht. Diese Ausrichtungseinheit 11 ist bei dem hier gewählten Ausführungsbeispiel als Laser ausgebildet, wobei die Diagonale des Rahmenecks 7 bzw. seine Schweißraupe längs des Laserstrahls ausgerichtet werden kann. Möglich sind aber auch Zangen oder dergleichen mechanische Einrichtungen, die eine automatische Zentrierung des Rahmens erleichtern.

Weiterhin ist es in diesem Ausführungsbeispiel vorgesehen, daß entsprechend den sich zwischen den Profilschenkeln 5, 6 ergebenden Winkeln der jeweilige Verfahrweg des Fräsers 2, also seine Start- oder seine Endposition, zur Außeneckbearbeitung automatisch bezüglich seiner Bearbeitungsposition eingestellt wird. Hierfür ist bei dem hier gewählten Ausführungsbeispiel eine mit dem verfahrbaren Teil 8 der Auflage angeordnete nicht dargestellte Zahnstange vorgesehen, welche mit einem Zahnrad 14 kämmt. Das Zahnrad 14 kämmt auf seiner anderen Seite mit der gezeichneten Zahnstange 15, bewegt diese also beim Verfahren der äußeren Auflageplatten 8 um den doppelten Weg. Die Zahnstange 15 ihrerseits begrenzt den Verfahrweg des Fräsers 2 bezüglich der Bearbeitungsposition des Werkstückes 7, d.h. der Fräser 2 fährt von seiner Ausgangsstellung bis zu dem Punkt, welcher durch die Stellung der Zahnstange 15 vorgegeben ist und welcher mit der Bearbeitungsposition am Außeneck des Rahmens 7 übereinstimmt. Der Anschlag zeigt dem Benutzer, daß die Endstellung erreicht ist.

Figur 2 zeigt die Vorrichtung der Figur 1 in Vorbereitung der Bearbeitungsstellung. Neben den inneren Anschlägen 3 liegen nun auch die äußeren Anschläge 4 an den Profilschenkeln 5 und 6 an, was durch Herausziehen der Betätigungsstange 9 entsprechen dem Doppelpfeil gemäß Figur 1 bewirkt wurde. Die Greifelemente der Spannzylinder 10 stehen nun genau über den Schenkeln 5 und 6 des festzuklemmenden Rahmens 7.

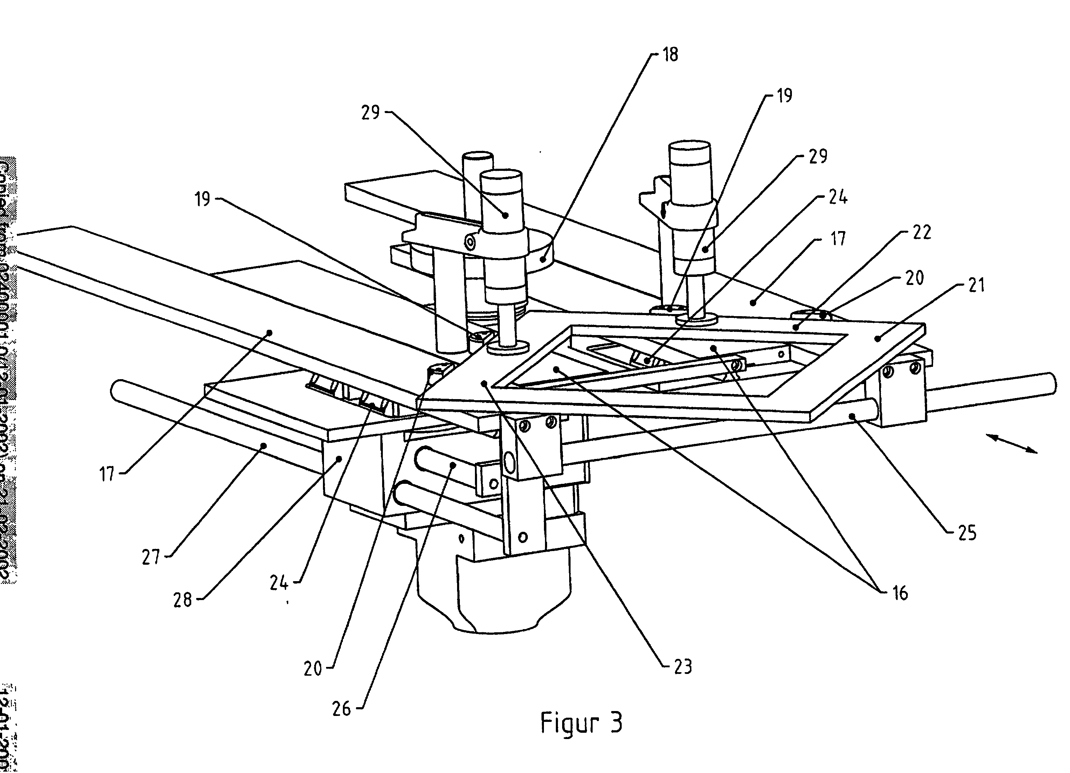

Figur 3 zeigt eine weitere Ausführung einer erfindungsgemäßen Vorrichtung, wobei hier im wesentlichen nur die Auflagemechanik gezeigt ist. Die Aufnahme für den rechtwinkligen Rahmen 21 besteht bei dem hier gewählten Ausführungsbeispiel aus den vier im seitlichen Abstand voneinander angeordneten verschiebbaren Auflageplatten 16, 17, welche verschiebbar an Führungen 24 eines nicht dargestellten Maschinengestells gelagert sind. Der Freiraum zwischen den beiden inneren Auflageplatten 16 dient wiederum als Verfahrweg für die Bearbeitungswerkzeuge 18. An den beiden inneren Auflageplatten 16 befinden sich drehbare Anschläge 19 für die Außenkanten des Rahmens 21, welche bei diesem Ausführungsbeispiel als halbe Rundkörper ausgebildet sind. Den Anschlägen 19 sind im seitlichen Abstand bewegliche äußere Anschläge 20 zugeordnet, die auf den äußeren, ebenfalls verschiebbaren Auflageplatten 17 befestigt sind und sich mit diesen verschieben lassen.

Die äußeren Anschläge 20 führen beim Verschieben der äußeren Auflageplatten 17 eine Linearbewegung gegenüber den inneren Anschlägen 19 aus. Die Verfahrbewegung der äußeren Anschläge 20 ist doppelt so groß wie die der inneren Anschläge 19, wodurch ein Verschieben der Profilspitze beim Winkeleinstellen vermieden wird. Die Zahnstange 27, welche mit der Auflageplatte 17 verbunden ist, bewegt über ein Getriebe 28 mit einem Untersetzungsverhältnis 1:2 die Zahnstange 26, die mit der inneren Auflageplatte 16 in fester Verbindung steht.

Zur synchronen Verschiebung der beiden äußeren Auflageplatten 17 sind deren vordere Enden mit der Betätigungsstange 25 verbunden. Durch Ziehen und Drücken an der Betätigungsstange 25 in Richtung des Doppelpfeiles lassen sich unterschiedliche Winkel der Anschläge 19 und 20 entsprechend den Winkeln der Profilschenkel 22 und 23 des jeweiligen Rahmens 21 einstellen.

Zum Festklemmen des Rahmens 21 sind in dieser Ausführung zwei Spannzylinder 29 vorgesehen, die mit den inneren Auflageplatten 16 verfahrbar sind und die Schenkel 22, 23 auf die Auflageplatten 16 pressen.

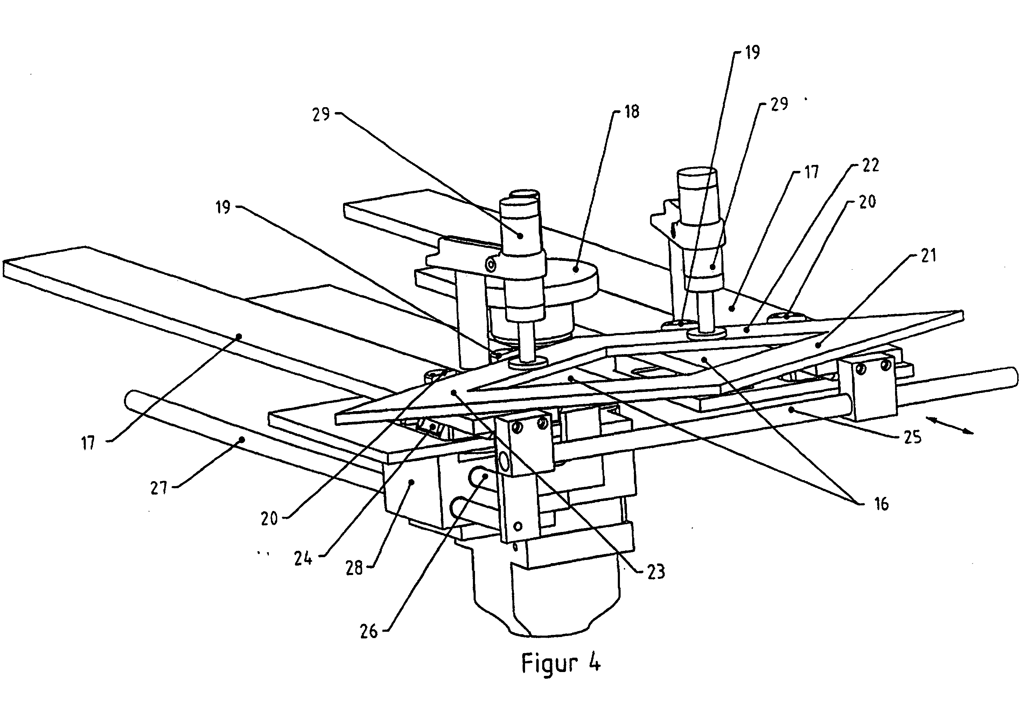

Figur 4 zeigt die Vorrichtung der Figur 3, wobei ein anderer Rahmen 21 eingespannt ist. Dieser Rahmen 21 ist nicht rechtwinklig, sondern rautenförmig und hat zwei spitze und zwei stumpfe Winkel. Entsprechend ist die gegenseitige Stellung der Anschläge 19 und 20 eine andere als in Figur 3. Gegenüber Figur 3 wurde die Betätigungsstange 25 nach hinten, das heißt in die Zeichenebene hinein verschoben, was eine Rückwärtsbewegung aller Platten 16 und 17 sowie der Anschläge 19 und 20 bewirkte. Die Rückwärtsbewegung der äußeren Elemente 17 und 20 war jedoch doppelt so weit wie die der inneren Elemente 16 und 19, was durch das Getriebe 28 (kämmendes Zahnrad)erreicht wurde.

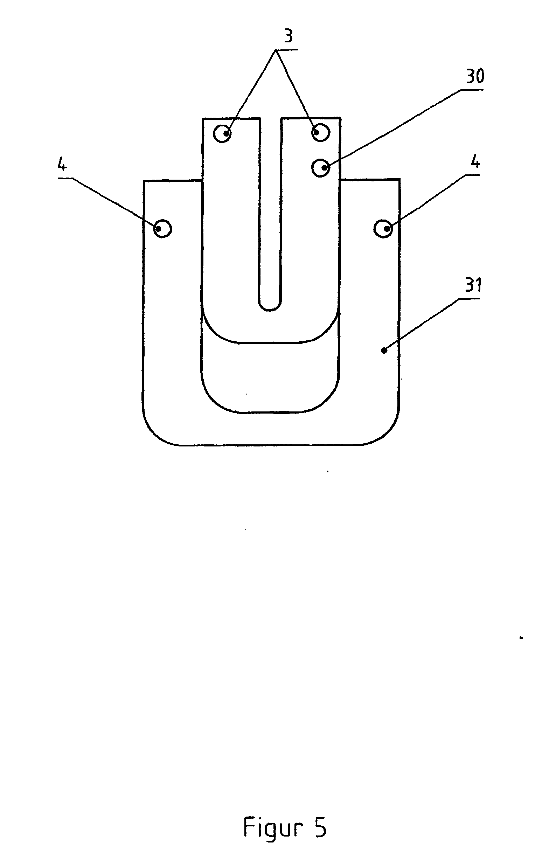

Figur 5 zeigt eine alternative erfindungsgemäße Auflagefläche, die aus den zwei U-förmigen Auflageplatten 30 und 31 besteht. Die innere Platte 30 bildet die inneren Auflageflächen mit den innern Anschlägen 3, die Platte 31 die beiden äußeren Auflageflächen mit den äußeren Anschlägen 4. Die Bewegungsmöglichkeiten entsprechen den oben beschriebenen. Entweder ist eine Platte 30 fest und die zweite verschiebbar, oder es sind beide 30, 31 verschiebbar, wobei dann bevorzugt wieder ein Mechanismus oder Getriebe dafür sorgt, daß sich die äußere Platte 31 doppelt so weit bewegt wie die Innere. Deutlich zu erkennen ist die stabile Ausführung, wobei sich die Platten 30 und 31 auch gegenseitig führen können.

### Bezugszeichenliste

- 1: Auflageplatte
- 2: Bearbeitungswerkzeug
- 3: Anschlag
- 4: Anschlag
- 5: Profilschenkel
- 6: Profilschenkel
- 7: Rahmen
- 8: Auflageplatte
- 9: Betätigungsstange
- 10: Spannzylinder
- 11: Ausrichtungseinrichtung
- 12: Führung
- 13: Verbindungssteg
- 14: Zahnrad
- 15: Zahnstange
- 16: Auflageplatte
- 17: Auflageplatte
- 18: Bearbeitungswerkzeug
- 19: Anschlag
- 20: Anschlag
- 21: Rahmen
- 22: Profilschenkel
- 23: Profilschenkel
- 24: Führung
- 25: Betätigungsstange
- 26: Zahnstange
- 27: Zahnstange
- 28: Getriebe
- 29: Spannzylinder
- 30: Auflageplatte
- 31: Auflageplatte

## Patentansprüche

1. Vorrichtung zum Bearbeiten der Rahmenecken von aus Kunststoff- oder Metallprofilstücken geschweißten oder aus Holzprofilstücken zusammengefügten Rahmen (7, 21), wie bspw. Fenster- oder Türrahmen, mittels wenigstens einem verfahrbaren Bearbeitungswerkzeug (2, 18), mit an den Rahmenaußenseiten zu liegen kommenden verschwenkbaren Anschlägen (3, 4, 19, 20), **dadurch gekennzeichnet, daß** die Anschläge (3, 4, 19, 20) an zwei oder mehr Auflageplatten (1, 8, 16, 17, 30, 31) angeordnet sind, die gegeneinander längsverschiebbar sind.

2. Vorrichtung nach Anspruch 1, **dadurch gekennzeichnet, daß** zwei innere und zwei äußere Auflageplatten (1, 8, 16, 17) vorgesehen sind.

3. Vorrichtung nach einem der vorhergehenden Ansprüche, **dadurch gekennzeichnet, daß** die innere(n) Auflageplatte(n) (1, 16, 30) feststehen und die äußere(n) Auflageplatte(n) (8, 17, 31) miteinander verfahrbar sind oder daß umgekehrt die äußeren (8, 17, 31) feststehen und die inneren (1, 16, 30) verfahrbar sind.

4. Vorrichtung nach einem der vorhergehenden Ansprüche, **dadurch gekennzeichnet, daß** die inneren Auflageplatten (1, 16) und die äußeren Auflageplatten (8, 17) je miteinander verfahrbar sind.

5. Vorrichtung nach einem der vorhergehenden Ansprüche, **dadurch gekennzeichnet, daß** die Verfahrwege der inneren Auflageplatte(n) (1, 16, 30) mit denen der äußeren Auflageplatte(n) (8, 17, 31) über ein Getriebe (28) in einem festen Verhältnis zueinander stehen.

6. Vorrichtung nach einem der vorhergehenden Ansprüche, **dadurch gekennzeichnet, daß** Spannzylinder (10, 29) vorgesehen sind, mittels welchen die zu bearbeitenden Rahmen (7, 21) auf die Auflageplatten (1, 8, 16, 17, 30, 31) pressbar sind.

7. Vorrichtung nach einem der vorhergehenden Ansprüche, **dadurch gekennzeichnet, daß** eine Ausrichtungseinheit (11) für die Bearbeitungsdiagonale vorgesehen ist.

8. Vorrichtung nach einem der vorhergehenden Ansprüche, **dadurch gekennzeichnet, daß** eine Automatik zum Einstellen der Position oder des Verfahrweges des Bearbeitungswerkzeuges (2) in Abhängigkeit vom eingestellten Rahmenwinkel vorgesehen ist.

9. Vorrichtung nach einem der vorhergehenden Ansprüche, **dadurch gekennzeichnet, daß** die innere (30) und die äußere Auflageplatte (31) je U-förmig ausgebildet sind.

## Claims

1. Device for processing frame comers of frames (7, 21), such as, for example, window or door frames, which have been welded from plastics material or metal profile members or assembled from hollow profile members, by means of at least one movable processing tool (2, 18), with pivotable abutments (3, 4, 19, 20) coming to bear against the frame outer sides, **characterised in that** the abutments (3, 4, 19, 20) are arranged at two or more support plates (1, 8, 16, 17, 30, 31) which are longitudinally displaceable relative to one another.

2. Device according to claim 1, **characterised in that** two inner and two outer support plates (1, 8, 16, 17) are provided.

3. Device according to one of the preceding claims, **characterised in that** the inner support plate or plates (1, 16, 30) is or are fixed and the outer support plate or plates (8, 17, 31) is or are movable together or that 7conversely the outer (8, 17, 31) is or are fixed and the inner (1, 16, 30) is or are movable.

4. Device according to one of the preceding claims, **characterised in that** the inner support plates (1, 16) and the outer support plates (8, 17) are respectively movable together.

5. Device according to one of the preceding claims, **characterised in that** the travel paths of the inner support plate or plates (1, 16, 30) are disposed in a fixed relationship to those of the outer support plate or plates (8, 17, 31) by way of a transmission (28).

6. Device according to one of the preceding claims, **characterised in that** clamping cylinders (10, 29) are provided, by means of which the frames (7, 21) to be processed can be pressed against the support plates (1, 8, 16, 17, 30, 31).

7. Device according to one of the preceding claims, **characterised in that** an aligning device (11) for the processing diagonals is provided.

8. Device according to one of the preceding claims, **characterised in that** an automatic system for setting the position or the travel path of the processing tool (2) in dependence on the set frame angle is provided.

9. Device according to one of the preceding claims, **characterised in that** the inner support plate (30) and the outer support plate (31) are each formed to be U-shaped.

## Revendications

1. Dispositif pour traiter les angles de châssis appartenant à des châssis (7, 21) soudés à partir d'éléments profilés en matière synthétique ou en métal ou assemblés à partir d'éléments profilés en bois, comme par exemple des châssis de fenêtre ou de porte, au moyen d'au moins un outil de traitement (2, 18) mobile, comportant des butées (3, 4, 19, 20) pivotantes venant en contact avec les faces externes du châssis, **caractérisé en ce que** les butées (3, 4, 19, 20) sont disposées au niveau de deux plaques de support (1, 8, 16, 17, 30, 31) ou plus, qui peuvent être déplacées longitudinalement l'une par rapport à l'autre.

2. Dispositif selon la revendication 1, **caractérisé en ce que** deux plaques de support internes et deux plaques de support externes (1, 8, 16, 17) sont prévues.

3. Dispositif selon l'une des revendications précédentes, **caractérisé en ce que** la ou les plaque(s) de support interne(s) (1, 16, 30) sont fixes et **en ce que** la ou les plaque(s) de support externe(s) (8, 17, 31) peuvent être déplacées ensemble ou **en ce qu'**à l'inverse les plaques externes (8, 17, 31) sont fixes et les plaques internes (1, 16, 30) sont déplaçables.

4. Dispositif selon l'une des revendications précédentes, **caractérisé en ce que** les plaques de support internes (1, 16) et les plaques de support externes (8, 17) sont respectivement déplaçables ensemble.

5. Dispositif selon l'une des revendications précédentes, **caractérisé en ce que** la course de déplacement de la ou des plaque(s) de support interne(s) (1, 16, 30) se trouve en relation fixe avec celle de la ou des plaque(s) de support externe(s) (8, 17, 31) par l'intermédiaire d'un engrenage (28).

6. Dispositif selon l'une des revendications précédentes, **caractérisé en ce que** sont prévus des cylindres de serrage (10, 29) au moyen desquels les châssis à traiter (7, 21) peuvent être comprimés sur les plaques de support (1, 8, 16, 17, 30, 31).

7. Dispositif selon l'une des revendications précédentes, **caractérisé en ce qu'**est prévue une unité d'alignement (11) pour la diagonale de traitement.

8. Dispositif selon l'une des revendications précédentes, **caractérisé en ce qu'**est prévu un dispositif automatique de réglage de la position ou de la trajectoire de déplacement de l'outil de traitement (2) en fonction de l'angle de châssis réglé.

9. Dispositif selon l'une des revendications précédentes, **caractérisé en ce que** la plaque de support interne (30) et la plaque de support externe (31) sont respectivement conçues en forme de U.
